# EUROPEAN PATENT SPECIFICATION

(11) **EP 2 140 636 B1**
(45) Date of publication and mention of the grant of the patent: **29.06.2011**
(21) Application number: 08738133.1
(22) Date of filing: 10.04.2008
(51) Int. Cl.: H04L 12/58

(54) **A MESSAGING SYSTEM AND METHOD**
NACHRICHTENÜBERMITTLUNGSSYSTEM UND VERFAHREN
SYSTÈME ET PROCÉDÉ DE MESSAGERIE

(30) Priority: 11.04.2007 US 907612 P
(43) Date of publication of application: 06.01.2010
(73) Proprietor: Markport Limited, Dublin 2 (IE)
(72) Inventor: SHEPPARD, Mark, Dublin 5 (IE)
(74) Representative: Weldon, Michael James
(86) International application number: PCT/IE2008/000042
(87) International publication number: WO 2008/126067

(56) References cited:
- US-A1- 2005 143 136

## Description

### INTRODUCTION

The invention relates to communication of messages in a messaging network such as a mobile network.

The maximum size of a single short-message is tightly constrained by the underlying bearer network (for example typically 160 characters in GSM-based networks). While added-value services may be used to add content to in-transit messages exchanged between end users, such enrichment cannot easily be performed due to space requirements.

The invention is directed towards overcoming this problem.

An example of message segmentation and compression is disclosed in the US patent US 2005/143136 A1.

### Standards References:

(1) [GSM 23.040]: 3GPP TS 23.040, Technical realization of the Short Message Service; GSM Specification; (precluded by ETSI 03.40).
(2) [GSM MAP 29.002]: 3GPP TS 29.002, Mobile Application Part (MAP) specification; GSM Specification; (precluded by ETSI 09.02).

### SUMMARY OF THE INVENTION

According to the invention, there is provided a message processing system as set out in claim 1.

In one embodiment, the signalling gateway is adapted to provide a message interception point and an integration point within a network.

In another embodiment, the system is adapted to operate as an end system at a MAP layer of the network and to transparently intercept in-flight messages transmitted in the signalling system and to perform translation based on pattern matching algorithms.

In a further embodiment, the network interceptor is adapted to intercept messages, to extract relevant details, and to submit them to the translator.

In one embodiment, there are one or more network interceptors each distributing to one or more translators.

In another embodiment, the system is adapted to operate independently of user devices transmitting or receiving messages and not requiring user interaction, and the translator performs content translation in a manner whereby the translated content is user-readable and so downstream de-compression is not required.

In a further embodiment, the services include subscriber-level services.

In one embodiment, at least one service interceptor adds information in the form of one or more service tags using at least some space freed up by the content translation.

In another embodiment, a service interceptor is adapted to perform message diversion using space freed up by content translation to add diversion tags.

In a further embodiment, a service interceptor is adapted to send copied messages to a subscriber's copy list using space freed up by content translation to add copy tags.

In one embodiment, the system comprises a service interceptor adapted to add information in the form of additional content such as sponsored or advertising content to messages using space freed up by content translation.

In another embodiment, the service interceptors include an automatic reply service interceptor.

In a further embodiment, said service interceptors add automatic reply text using space freed up by content translation.

In one embodiment, at least one service interceptor is adapted to dynamically invoke translation if space is required for it to perform its service.

In another embodiment, a service interceptor is adapted to prevent repetition of a service already applied to a message, to prevent looping of the message.

In a further embodiment, a service interceptor prevents copying of a copied message and another service interceptor prevents diversion of a diverted message.

In one embodiment, a service interceptor creates a signature for the message using a hash function from unique elements of the message, stores the signature in a persistent store with a particular lifetime, and compares the generated signature with one which is received in the message.

In another embodiment, a service interceptor is adapted to add information in the form of user data header information elements.

In a further embodiment, the translator is adapted to store pre-configured translation policies and to operate according to said policies.

In one embodiment, the translator is adapted to operate according to a space requirement policy in which translation is performed for only a required level of space to be freed.

In another embodiment, the message converter operates according to a subscriber policy which indicates whether a subscriber has opted into a translation service or not, whether the service is being applied in the delivery domain or the submission domain, and to indicate the relevant language and region for translation.

In a further embodiment, a policy includes subscriber preferences for guiding conversion.

In one embodiment, the translator is adapted to automatically configure a translation algorithm in run time.

In another embodiment, the translator is adapted to perform rollback of the translation to re-generate the original message.

In a further embodiment, the translator comprises an object-oriented architecture, in which functions are performed by instantiating objects to provide the service interceptors and other functions.

In one embodiment, the translator performs translation in a manner which requires downstream de-compression.

In another embodiment, the message converter is adapted to reduce the number of segments in a concatenated message by virtue of the content translation.

In another aspect, there is provided a user device as set out in claim 22.

In another aspect, there is provided a computer readable medium comprising software code for performing operations of any messaging system defined above when executing on a digital processor.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a high level view of a message processor and network elements it communicates with;
Fig. 2 is a diagram showing message transfers;
Fig. 3 is a diagram of architecture of the message processor;
Figs. 4 and 5 are object models for conversion;
Figs. 6 and 7 are message interaction diagrams for conversion by the message processor;
Fig. 8 is a component view of the interactions between an interceptor, a core processor, and various processors; and
Figs. 9 to 11 are object model representations of the message processor.

### Terms used in the specification

### Chain of Responsibility:

In Object Oriented Design, the chain-of-responsibility pattern is a design pattern consisting of a request object and a series of processing objects. Each processing object contains logic for handling the request, if it wishes to do so. The request handling objects are also configured to pass off the request object to the next processing object in the chain.

Thus the sender of a request is de-coupled from its receiver by giving more than one object a chance to handle the request, chain the receiving objects and pass the request along the chain until an object handles it. Also, it allows a series of objects to process a request in turn.

### DefaultTruncationPolicy:

This abstraction encapsulates the process and procedures to be carried out in the event that the body of the message must be truncated to generate required space.

### DeliveryDomain:

The delivery domain indicates that the SMS text message has been intercepted during a transmission of a message from an SMSC to a destination subscriber. It, also, includes any attributes and configurable parameters which may influence the selection of a translation strategy.

### DestinationAddress:

An identifier representing the target subscriber to which a message is to be delivered.

### DomainDictionary:

A representation of the dictionary required for a particular translation strategy, and localized for a particular linguistic domain.

### Feature Server:

The feature server is an intelligent message processor that is deployed in the operator's messaging network, intercepting in flight messages and applying value added service processing features as selected and activated by a subscriber.

### InsufficientTextificationSpacePolicy:

This abstraction encapsulates the process and procedures to be carried out in the event of a translation strategy unsuccessfully delivering the required space within a short message body.

### Locale:

In computing, locale is a set of parameters that defines the user's language, country and any special variant preferences that the user wants to see in their presentation interface. Usually a locale identifier consists of at least a language identifier and a region identifier.

### MessageParser:

A processing element (module or object) in the system that scans, and breaks up the received message into a tokenized list.

### MessageTokenList:

A list of message tokens which is the output from the message parser.

### Message Transformer:

A processing component which manages the conversion of an SMS text message body into a textified equivalent by means of selecting and applying a translation strategy.

### OriginatingAddress:

An identifier representing the originating subscriber from whom a message has been sent.

### PhraseTranslation:

This is a translation strategy that contextualizes groups of words into localized phrases, recognizing them as a semantically meaningful unit and, then translates them as a unit. Phrase translation recognizes the groups of words, well known (localized or even colloquial) phrases and translates to alternative semantically equivalent forms of fewer characters.

PhraseTranslator:

An algorithm pertaining to a phrase translation policy.

### ServiceDomainLegalPolicy:

This abstraction captures legal aspects of an operator's domain, primarily representing whether or not it is legally permitted to perform a conversion of a SMS text message body to a textified version without any legal impact.

### SimpleTextTranslation:

This is the process of translating words in an SMS text message to a textified equivalent in a one to one approach, thus reducing the number of characters in the short message body.

### SimpleTextTranslator:

A concrete implementation of the algorithm pertaining to a SimpleTextTranslation policy.

### Semantic Text Translation:

This is a translation strategy whereby groups of words in the short message body are contextualized into a semantically meaningful unit and translated into a textified equivalent without loss of semantics.

### Semantic Text Translator:

An algorithm pertaining to a Semantic Text Translation policy.

### SubmissionDomain:

An abstraction representing attributes and characteristics associated with the submission phase of an SMS text message.

### SubscriberTextificationPolicy:

An abstraction representing configurable attributes and parameters which define the textification process which may be applied for a particular subscriber. An essential aspect of this policy abstraction is whether a subscriber agrees to have their SMS text messages transformed in any way.

### SubscriberPreference:

A set of attributes associated with a subscriber, which define selected options as to how they wish the system to behave when it is applying services to messages associated with them.

### SigtranInterceptor:

This is a component subsystem within a Feature Server system that monitors SIGTRAN signalling traffic at a configured level, typically M2PA. It applies match rules to these monitored messages for the purpose of intercepting SS7 messages containing SMS text messages associated with a set of provisioned subscribers. These messages are intercepted, internalized and transmitted to Feature Server core using the FSP.

### SMPP:

The short message peer-to-peer protocol (SMPP) is a telecommunications industry protocol for exchanging SMS messages between SMS peer entities such as short message service centres and External Short Message Entities (ESME). It is often used to allow third parties (e.g. value-added service providers like news organizations) to submit messages.

### SMTP:

Simple Mail Transfer Protocol (SMTP) is the *de facto* standard for e-mail transmissions across the Internet. Formally SMTP is defined in RFC 821 as clarified by RFC 1123. The protocol used today is defined in RFC 2821.

### SOAP:

SOAP (originally Simple Object Access Protocol) is a protocol for exchanging XML-based messages over computer networks, typically using HTTP as its transport protocol. SOAP forms the foundation layer of the Web services stack, providing a basic messaging framework upon which further layer of abstraction can be built.

### TransformationDomain:

This abstraction represents the domain in which the conversion is to take place. This can be the SubmissionDomain or the Delivery Domain. It is associated with a collection of translation policies, translation strategies, and translation process for message conversion.

### TranslationTokenList:

An abstraction representing the set of translated message tokens resulting from the translation of the original text in the short message body.

### TranslationPolicy:

An abstraction that defines the course of action or procedure to be followed for a particular text translation.

### TranslationStrategy:

An implementation of the algorithm to be used for translation of text in a particular short message body. This is defined and instantiated by a TranslationPolicy.

### TextificationDictionary:

A database subsystem that assists in the translation of word text and phrase text to a "textified" equivalent in order to compress the message content. It is anticipated that any particular embodiment of this invention would have a number of such dictionaries. The selection of a dictionary would be influenced by a number of parameters which would include, but not necessarily be limited to, Locale, Translation Policy, and operator's regional domain. Each TranslationStrategy has a corresponding dictionary.

### TextMessage:

An SMS/short message containing text in the user data/body of the message.

### WSDL:

The Web Services Description Language is an XML-based language that provides a model for describing Web services. WSDL is an XML-based service description on how to communicate using web services. The WSDL defines services as collections of network endpoints, or ports. WSDL specification provides an XML format for documents for this purpose.
UDH: User Data Header as defined in [GSM 23.040], being a general extension mechanism using information elements

### Description of the Embodiments

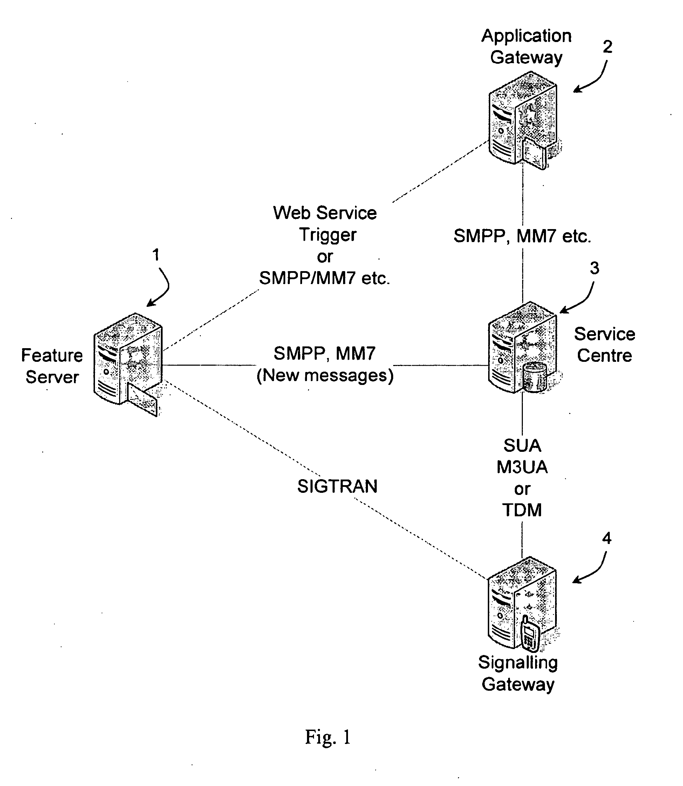

Referring to Fig. 1 a message processing system is provided by a feature server 1 incorporating software functions which operate without user intervention to intercept SMS text messages, to translate the original text content in the short message body to compress it, and to forward the converted message on in the network. The content compression frees up space, and some or all of this space may be taken up by addition of tagging information such as text tags or user data header (UDH) information elements.

The translator is part of a message converter and parses the content and identifies candidate words for translation, and then iterates over the content, replacing the candidate word to allow the addition of one or more text tags to the message. The conversion can be driven by a space acquisition policy, which drives the conversion strategy. That is to say, the translation could be performed on just enough words and phrases to free up the required space, or it could be on the message as a unit, so as it give it uniformity of presentation.

The translation is based on maintaining a dictionary of words and phrases to support the translation of the original words and phrases to their "textified" form. The incoming SMS text message body is parsed and tokenized. Potential candidate tokens for translation are marked. The translation takes place with a token lookup of the textification database, and the replacement of the original word or phrase, with its TXT equivalent. As the translation is to a "textified" form the message can be read by the subscriber at the recipient device without need to decompress it. Therefore in this embodiment the invention has the major advantage of achieving compression of content to free up space for other information, but not having any impact on downstream network elements or the recipient device or application. It is completely transparent to the receiving device or application.

The message converter may add service-oriented text such as text tags (for indicating services such as a diverted message (FWD:) or a copied message (CPY:)), and/or service-oriented text such as text inserted in the body of a message such as by adding a sponsored message, where a text advertisement is added to the message (e.g. "free coffee @ CafeLatte"), and/or user data header (UDH) information elements. The content translation advantageously frees up space to allow the addition of service-oriented text. This avoids the prior approach of truncating the message either at the beginning or the end.

In more detail, in the preferred embodiment the feature server 1 is an intelligent message processor that is deployed in the mobile network, intercepting in-flight messages and applying value added service processing features as selected and activated by a subscriber. A deployment infrastructure for the feature server is shown in Fig. 1, in which the server 1 interfaces with an application gateway 2, a service centre 3, and a signalling gateway 4. The feature server 1 is fronted by a number of signalling gateways (SS7 gateways: SS7 to M2PA, M3UA or SUA). A SIGTRAN interceptor in the feature server 1 monitors signalling traffic and intercepts the in-flight SMS messages, filters them based on subscriber identification (MSISDN or IMSI), and relays selected fields from the message (refer to [GSM 23.040]) to a message processor where subscriber services are applied. In another embodiment the server 1 may incorporate support for ANSI based short messaging standards (ANSI-41).

The feature server 1 is transparently deployed within a mobile network. That is to say from an SS7/SIGTRAN perspective the feature server is not seen as an end system at the MAP layer. The feature server 1 transparently intercepts "in flight" SMS text messages by "sniffing" messages transmitted in the signalling system and based on pattern matching algorithms captures messages associated with subscribers provisioned in the system. It then applies subscriber-level services to the intercepted messages prior to releasing them back into the network to continue their journey to a target destination.

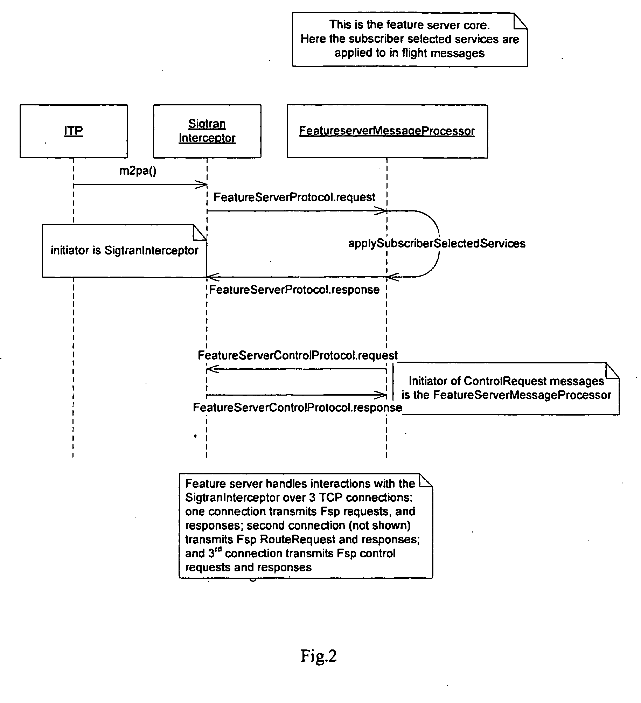

Referring to Fig. 2, the feature server is configured to monitor SIGTRAN traffic at the M2PA layer. However, it is not restricted to monitoring signalling traffic at this level. It is possible for it to be configured to operate so that M3UA or SUA signalling traffic is monitored. When the SigtranInterceptor "captures" relevant SMS text messages associated with a feature server subscriber, they are internalized and passed on to the core processing engine. The server's message converter is represented in Fig. 2 as the message processor. The communication between the SigtranInterceptor and the feature server message processor is via a proprietary protocol called "FSP" (Feature Server Protocol). Additionally, there is a control channel active between the FeatureServerMessageProcessor and the SigtranInterceptor. The control channel supports control request interactions between the FeatureServerMessageProcessor and the SigtranInterceptor, for example, start, stop, pause, update subscriber table operations. The FeatureServerMessageProcessor returns instructions to the SigtranInterceptor, when it has processed a message. These instructions are carried in a response message of the FSP. These instructions inform the SigtranInterceptor as to what should be done with the intercepted message. This may be to release it to the network and allow it to go to its specified destination(s). Or, it might be to terminate the transmission of the message and to return a positive acknowledgement to the sender, thus fabricating a successful transmission of the message.

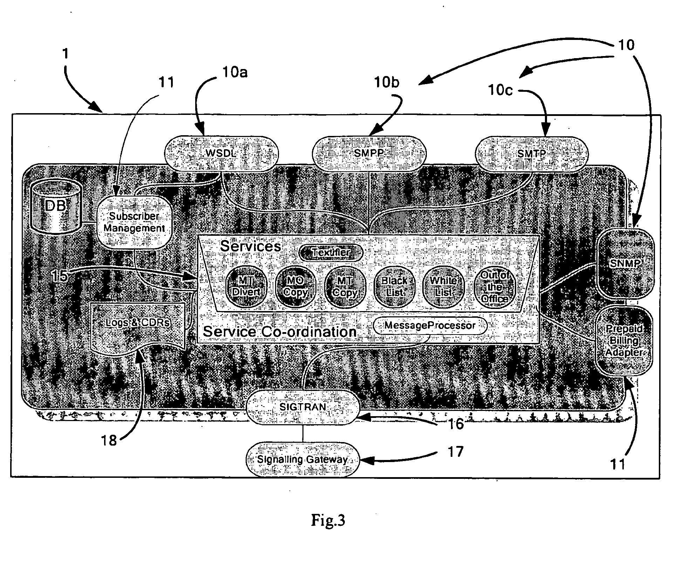

Fig. 3 shows the feature server from a functional module perspective. This shows a number of communication modules 10, subscriber and service subscription management modules 11, and a message converter processing core 15 which apply services to in-flight SMS text messages. It also shows a network interceptor 16, called a SigtranInterceptor, and a signalling gateway 17 to provide a message interception point as well as an integration point within a messaging network.

The feature server 1 provides a provisioning web service interface. Through this interface it exposes a number of subscriber provisioning and service provisioning operations via a WSDL (Web Service Definition Language) description and these facilities are accessed via SOAP interactions. This is represented in the WSDL block component 10 (a). A feature server system is SNMP enabled for standardized management system integration. As services such as Copy, Divert, and Out Of The Office (OOTO) are applied they result in new messages being generated by the system. These can be new SMS text messages or email messages, which are sent to a subscriber specified set of addresses. The SMPP 10(b) and SMTP 10(c) communication modules facilitate the sending of SMS text messages and email messages respectively. Communication with prepaid billing systems is facilitated by the PrePaidBilling Adapter module 11. Post paid billing results in CDR records being generated, which is handled by the Logs and CDRs block component 18. Interfacing the system to the signalling network is the SIGTRAN communication processor 16, also, referred to as a SigtranInterceptor in Fig. 2. This provides for the transparent interception of in-flight SMS text messages to which subscriber-level services should be applied.

The message converter core 15 is composed of a number of services which are applied to intercepted messages, as facilitated by subscriber-level service subscriptions. The core 15 exists as a component subsystem which is invoked, as required, by various message services, for example MO Copy, MT Copy, MT Divert, and Sponsored Message service.

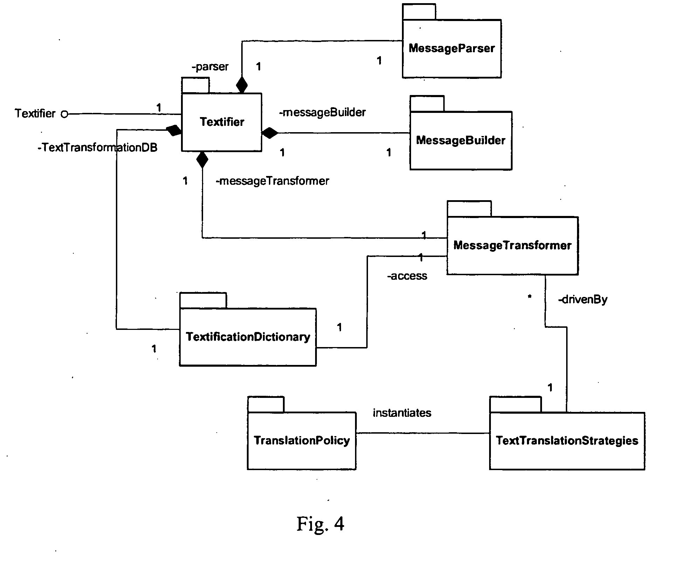

Fig. 4 shows a high level component view of an embodiment of this invention which would logically reside in the core 15. This component view shows a number of major modules associated with the "translation" process of this invention: Message Parser, Message Builder, MessageTransformer, Text Translation Strategy, Translation Policy, and TextificationDictionary. The Message parser parses the SMS text message body into a list of message tokens. These are processed by the Message Transformer using a selected translation strategy and Textification Dictionary. The Textification Dictionary module assists in the translation of a word or phrase to a "textified" equivalent. The Message Builder constructs a new text message body from the translated tokens.

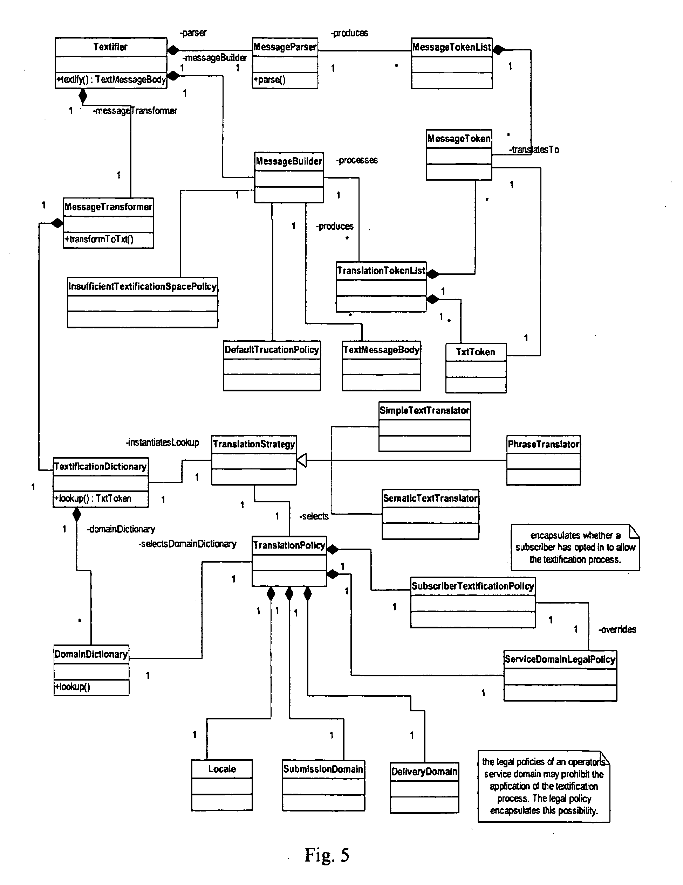

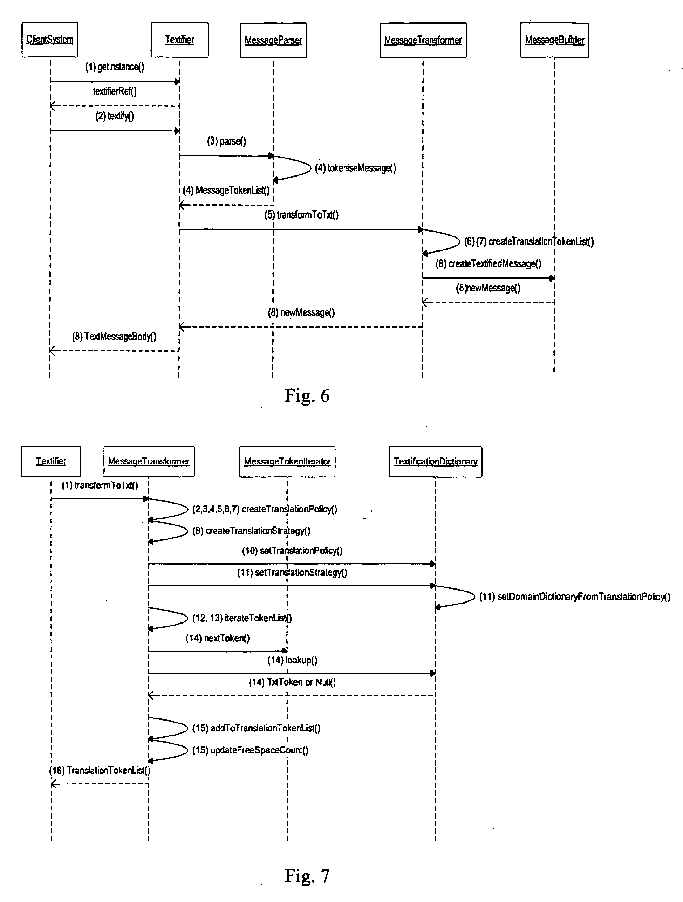

The overall operational view of the system is that an SMS, text message can be transformed to a textified version so that additional space can be obtained in the SMS message body, which would allow the addition of service-oriented text. This can be for the insertion of service tags for Copy and Divert (e.g. subscriber diversion of messages to a secretary, or message copying to email or to a friend) services, or insertion of text in the body of a message such as advertisement text in the case of sponsored message service. Fig. 5 shows a number of object abstractions that assist in the conversion of the SMS text message. The MessageParser breaks up the received message into a tokenized list. The token list is processed by a MessageTransformer which applies a TranslationStrategy to the token list. The TranslationStrategy is selected by a TranslationPolicy. The TranslationPolicy is composed of the SubscriberTextificationPolicy, which indicates whether the subscriber has opted into this service or not, whether the service is being applied in the delivery domain or the submission domain, the Locale (language, and region identification), and the ServiceDomainLegalPolicy, which encapsulates any legal prohibition of such a service. All of these elements interact in determining the selection of an appropriate TranslationStrategy. The TranslationStrategy uses an appropriate TextificationDictionary, which is instantiated as part of the strategy's construction, to support the text translation. The MessageBuilder component constructs a new text message body from the translated token list. In doing so it may have to apply InsufficientTextificationSpacePolicy, which may result in a rollback to the original message body and the application of a DefaultTruncationPolicy. Overall, these objects interact and collaborate to perform a translation of an SMS text message body to a translated version. The interactions and collaborations are further illustrated in Figs. 6 and 7.

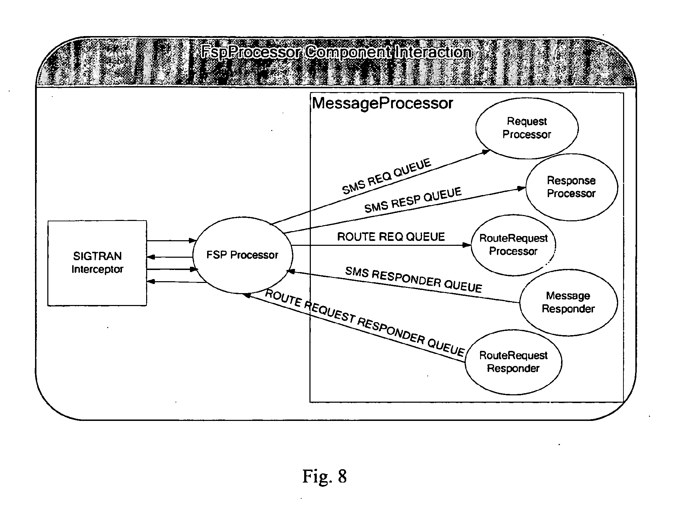

The communication between the SigtranInterceptor 16 and the core 15 is based on the FSP proprietary protocol. The SigtranInterceptor 16 intercepts various GSM 23.040 and GSM MAP 29.002 messages, extracts relevant details and submits processing requests to the feature server 1 using the FSP over a dedicated channel. There is a direct association between the SigtranInterceptor 16 and a core process. The FSP uses TCP as its transport protocol. This is shown in Fig. 8.

The FSPP receives FSP messages from the SigtranInterceptor 16, internalises them and performs a first level dispatch to the core 15. The message processor core 15 then performs a second level dispatch to an appropriate message handler (Service Chain, Route Request Handler, Copy Request Processor).

The initial set of protocol messages support the submission of SMS messages into the feature server core 15 including MO messages and MT messages. These include FSP PDUs such as: ProcessMoSms, ProcessMtSms, ProcessRouteRequest, ProcessSubmitStatus. These requests contain details from intercepted MO FWD SM, MT FWD SM, SRI SM, and the response forms of these protocol messages.

The ProcessRouteRequest carries information from an intercepted SRI SM RSP, and is sent by the SigtranInterceptor 16 to determine if an MT delivery should be redirected through the feature server 1. This is used mainly in a scenario where the FSM would not ordinarily come through the subscriber's home network, for example, in a foreign SMSC delivery to a feature server subscriber roaming in a foreign network.

Additionally, the FSP has an associated control protocol, which assists in the control and management of interactions between the feature server core 15 and the SigtranInterceptor 16. These interactions are supported on a separate dedicated control channel. The initial set of operations defined for the control channel consists of the command directives start, stop, pause, and load subscriber table (which provides the list of subscribers for whom added value services are to be provided).

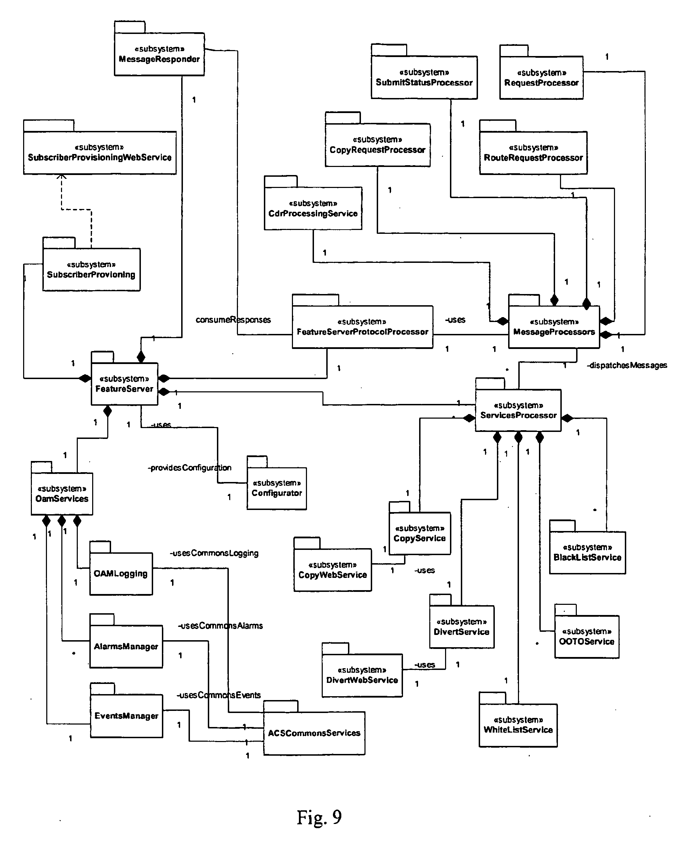

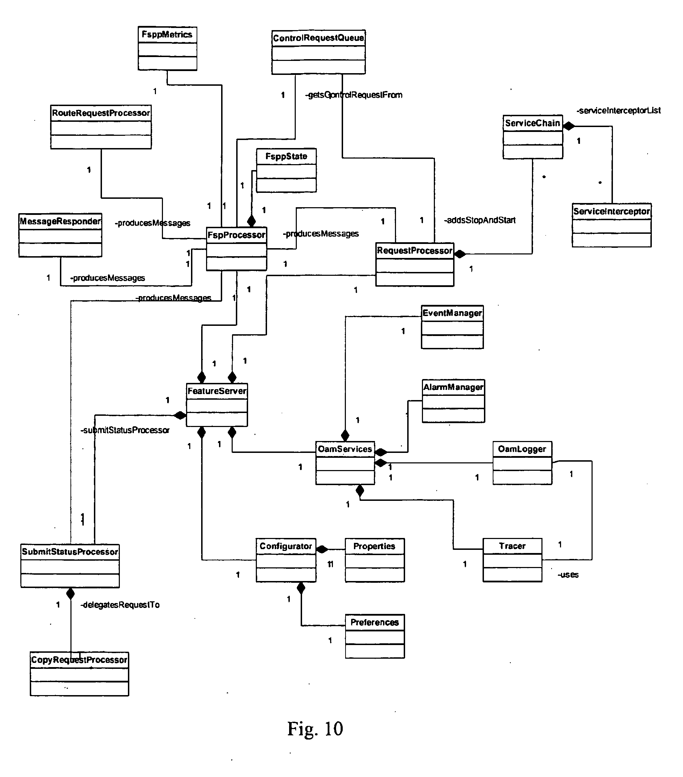

Fig. 9 provides an object component level view of the feature server core 15, while Fig. 10 shows a finer-grained object level view of the feature server 1. The model in Fig. 9 shows that the feature server 1 is includes a FeatureServerProtocol Processor, MessageProcessors, and a MessageResponder. The MessageProcessors component is a logical grouping of components which carry out messaging processing and which includes, RequestProcessor, RouteRequestProcessor, and SubmitStatusProcessor. Additionally, the feature server 1 contains a number of common platform services, such as logging facilities (OAMLogging), and configuration facilities (Configurator).

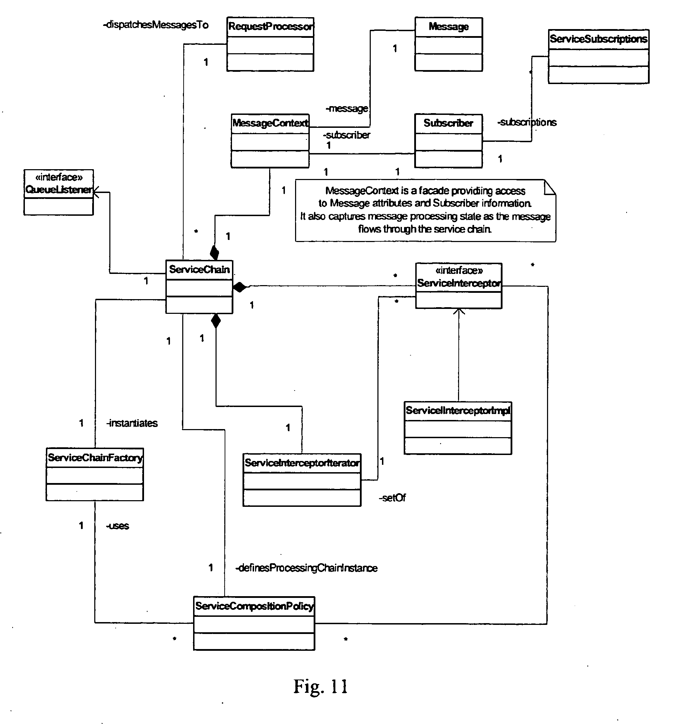

The RequestProcessor, RouteRequestProcessor, and SubmitStatusProcessor act as message dispatchers and delegate messages to various "handlers" that "listen" for requests. The RequestProcessor delegates ProcessMoSms and ProcessMtSms messages to the ServiceChain. The RouteRequestProcessor delegates ProcessRouteRequests to the RouteRequestHandler, and the SubmitStatusProcessor delegates ProcessSubmitRequests to the CopyRequestProcessor. Each of these handlers process the delegated messages and then notifies completion via an associated MessageResponder (asynchronous completion token). The ServiceChain is shown in Fig. 11. It is central to the processing of an intercepted message, and it is within the processing chain that a text body translation is performed.

A ProcessMoSms and ProcessMtSms are objects abstractions which represent the internalized intercepted SMS text message during MO submission and MT delivery processes of the transmission of an SMS text message, respectively. These fine grained abstractions are not shown in the component model of Fig. 9. A ProcessRouteRequests object is an abstraction which encapsulates the internalization of an intercepted SRI-SM response from a HLR. Similarly, a ProcessSubmitRequests object is an abstraction which encapsulates the internalization of an intercepted MO-FSM response associated with an SMS text message submission to an SMSC and an MT-FSM response associated with an SMS text message delivery by an SMSC. These message and request object abstractions are not shown in the component model of Fig. 9. These form part of the Feature Server Protocol specification, which governs interaction between the SigtranInterceptor 16 and the message processor of the services core 15.

Fig. 10 provides a fine grained object level view of the feature server processing core 15. This model shows that the core 15 includes an FspProcessor, RequestProcessor, RouteRequestProcessor, SubmitStatusProcessor, MessageResponder. Additionally, it contains a number of common platform services, such as logging facilities (OamLogger), and configuration facilities (Configurator). The FspProcessor receives processing requests containing internalized SMS text messages from the SigtranInterceptor 16, as shown in the interaction diagrams in Fig. 2 and Fig. 8. These are routed to the appropriate processor depending on the channel on which they were received and on their message type. The FspProcessor is a producer of messages for each of the RequestProcessor, the RouteRequestProcessor, and the SubmitStatusProcessor. The FspProcessor reads or consumes response messages from the MessageResponder for transmission to the SigtranInterceptor, as shown in the interaction diagrams of Fig. 2 and Fig. 8. The RequestProcessor, RouteRequestProcessor, and SubmitStatusProcessor act as message dispatchers and delegate messages to various "handlers" that "listen" for requests. These are all derived from the MessageProcessor class - although this specialisation is not shown in Fig. 10. The RequestProcessor delegates ProcessMoSms and ProcessMtSms messages (internalized SMS text messages) to the ServiceChain. The RouteRequestProcessor delegates ProcessRouteRequests to the RouteRequestHandler, and the SubmitStatusProcessor delegates ProcessSubmitRequests to the CopyRequestProcessor. Each of these handlers process the delegated messages and then notifies completion via an associated MessageResponder (asynchronous completion token). Of main interest to this invention is the Service Chain framework, which is responsible for processing of internalized SMS text messages and correspondingly applying subscriber level services. The Service Chain is where the main core of message processing activity occurs within the Feature Server core. This is shown in detail in Fig. 11.

The basic processing model for the feature server core 15 is that of a processing pipeline, composed of a chain of service interceptors, in which the subscriber-selected services are applied to the in-flight message, (using a Chain of Responsibility pattern). The Service Chain and the interceptor framework provide the basic components for processing a message. This is supplemented by an asynchronous message passing framework, based on managed queues which allow a service interceptor to invoke an auxiliary service in a non-blocking way when it is appropriate to do so.

The general outline for processing a message is one in which a message is associated with a subscriber (either sender or recipient), and this subscriber will have an active set of services, which may be applied to the in flight message.

The service interceptors in the Service Chain process the (intercepted) message and apply the selected subscriber services to the message. The last interceptor in a processing chain is a Response Generator Interceptor. This is always in a service chain. This will generate a response, which is sent to the Sigtranlnterceptor via the FSP Processor.

This response will provide an indication as to whether or not the original message is to be forwarded to its target destination or whether it is to be terminated at this point. This information is conveyed to the Sigtranlnterceptor 16 by means of property settings in the FSP Response. If the message is to be sent unmodified then the PassThrough property is set in the response. If the message is to be sent to its target destination, but the interception of the corresponding response to the submission or delivery is required then PassThrough-Notify property is set. In the case where a divert or a black listing has been applied, then the Terminate property is set. Fig. 9 shows a high level component view of the service processor framework.

The Service Chains are constructed by the Request Processor when it is instantiated and configured. A Service Chain has two service lists associated with it, which are constructed from a configuration specification. One list is MO service and one list is MT services.

When a message is being processed it is set in a Message Context. This is a façade to Subscriber and Message information. It defines the processing context for a particular message. The service mode is set in the Message Context. This is determined from the request message type, and is used to route the processing via the MO service interceptor list or the MT service interceptor list.

The ServiceInterceptors interface is implemented by a ServiceInterceptorImpl. This is an abstract class from which the service implementations are derived. Service Chains are instantiated by the Request Processor which will maintain a pool of ServiceChain objects. The Request Processor dispatches messages from its message queue to a Service Chain object.

A ServiceChain has an associated message context which encapsulates various details associated with processing a message: subscriber information, message and a processing strategy. The processing strategy will define the processing path of the message through the chain of service interceptors. The strategy is created from the composition policy and the active service list of the subscriber.

A message is processed in a context by the Service Chain, which executes the processing strategy associated with the subscriber services selection. Only those services that are part of the subscriber's service subscription will be invoked. Thus when a service interceptor is invoked and the Subscriber has not activated the corresponding service, the invocation effectively becomes a null call.

A message context provides a façade to the processing chain and the processing strategy for subscriber information and message details. It also records the processing state of the message as each of the subscriber services is applied. The message context defines an association between a subscriber object and a message object for the purpose of processing the message during the invocation of a ServiceChain. The message context records processing state which includes which services have been applied, and any errors and exceptions that occurred during the execution of the ServiceChain and its corresponding interceptor list. The Response Generator Interceptor is the last interceptor in a ServiceChain's interceptor list, and extracts relevant state from the message context, which results in the update to the message's state for transmission back to the SigtranInterceptor.

In summary, a feature server core 15 consists of an FSP (Feature Server Protocol) communication processor, a request processor, and a response processor. The request message processor is composed of MO and MT service chains, which in turn are composed of a number of service interceptors. Each service interceptor manages the application of a subscriber level service to the "in flight" message. A service interceptor interacts with auxiliary services and servers, where appropriate to carry out additional processing activities, such as, the sending of copied messages to a subscriber's copy list via SMPP or SMTP in a copy service scenario. The conversion system has relevance to at least three service interceptors, for example, copy service interceptor, divert service interceptor, sponsored message service interceptor.

The interactions and collaboration between objects relating to the conversion of an SMS text message containing a text body during the application of a subscriber service is as follows.

A client system or object (in the context of this invention and a feature server embodiment this is a FeatureServer service interceptor object or one of its cohorts, that is, a client is another object within the implemented system,) invokes a message content compression on the conversion system, supplying the TextMessage body and the originating address, and a list of destination addresses. A list of MessageTokens is obtained from the MessageParser via a parse invocation. The returned token list or stream (MessageTokenList) is then fed to the MessageTransformer, which identifies the potential candidates for translation by querying the TextificationDictionary. The TextificationDictionary uses the TranslationPolicy to guide the appropriate translation from the TextificationDictionary. The TranslationPolicy will determine which TranslationStrategy will be instantiated for a particular translation.

The SubscriberTextificationPolicy dictates whether the conversion is to be allowed or not. If the conversion is allowed, SubscriberPreferences are used to guide the TranslationPolicy, as to further conversion domains to be used. The TransformationDomain can be that of the SubmissionDomain, or the DeliveryDomain. These are used to establish colloquial and local regional idiosyncrasies in the textification process. The initial basis for locating the dictionary to be used is the Locale, which identifies the national language and the initial domain database to be used. The SubmissionDomain and the DeliveryDomain further refine the target dictionary to be used for the translation. The TextificationDictionary query results in a list of original words or phrases and the textified equivalent TranslationTokenList.

At a certain level the SubscriberTextificationPolicy encapsulates the fact of whether the subscriber has agreed to conversion. For example, this agreement may come as part of a subscriber's subscription process, where the subscriber formally enters into an agreement with an operator for use of the Feature Server services according to particular terms and conditions. The application of these terms and conditions are via an implementation class corresponding to the SubscriberTextificationPolicy abstraction. It may happen that, even if there is consent by the user to permit the conversion, there are certain legal policies enforced within the operator's service domain that prohibit the conversion process being applied. Thus the SubscriberTextificationPolicy contains a ServiceDomainLegalPolicy, which has the overriding effect of permitting or not the conversion policy. This is shown in the system's object model in Fig. 5. For any particular implementation, it is also possible that a range of such policies may exist, where particular policies apply to different categories of subscriber and to different service applications.

The MessageTransformer then constructs a new message body from the original MessageTextBody and the TranslationTokenList. This new message is returned as the output to the compression operation's invocation. The interaction diagrams in Fig. 6 and Fig. 7 show the flows in the processing of a TextMessage.

Fig. 6 shows the overall flow for the conversion of a message, via the interaction between the main components in the system, Textifier, MessageParser, MessageTransformer, and MessageBuilder.

Referring to Fig. 6 (Textifier Interactions) the interactions are as follows:
1. The Client System (CS) obtains a reference to the Textifier.
2. The CS then invokes the textifier, passing the following arguments to the call: a reference to the OriginatingAddress, the DestinationAddress, and the MessageTextBody.
3. The Textifier invokes parse on the MessageParser passing a reference to MessageTextBody as arguments to invocation.
4. The MessageParser tokenizes the MessageTextBody and returns a MessageTokenList.
5. The Textifier invokes transformToTxt on the MessageTransformer passing the MessageTokenList as argument.
6. The MessageTransformer transforms the MessageTokenList into a TranslationTokenList c.f. Fig. 7 for further elaboration on this flow.
7. The TranslationTokenList contains a count of the space that has been freed in the message, and a copy of the MessageTokenList which is now extended to include TransmutedMessageTokens i.e. the original TextToken and its corresponding TxtToken.
8. The TranslationTokenList is passed to a MessageBuilder which returns a new MessageTextBody containing the transformed text.

A client system in the context of a Feature Server embodiment of this invention is a service interceptor or a collaborating backend server object.

Fig. 7 shows the main interactions that take place during the conversion of a message, that is, the translation of the incoming message tokens to a set of textified equivalent message tokens. It also keeps a record of how much space has been freed up.

Referring to Fig. 7 the interactions are as follows:
1. The Textifier invokes transformToTxt on the MessageTransformer passing the MessageTokenList as argument.
2. The MessageTransformer creates a TranslationPolicy.
3. The TranslationPolicy contains the following objects: SubmissionDomain, DeliveryDomain, SubscriberTextificationPolicy, Locale.
4. The SubmissionDomain is generated from the OriginatingAddress.
5. The DeliveryDomain is generated from the DestinationAddress.
6. The SubscriberTextificationPolicy is a system preference of the Subscriber associated with the OriginatingAddress, or with the DestinationAddress. This will depend on whether the textification is being applied during MO submission or MT delivery. Typically for an MO submission the Subscriber associated with OriginatingAddress (OA) is the policy instantiator. In the case of an MT delivery the Subscriber associated with DestinationAddress (DA) will be the policy instantiator. However, it is also possible, for the MT delivery scenario, to have policy instantiation determined by the Subscriber associated with the OriginatingAddress. Similarly, for an MO submission the policy instantiator could be the DestinationAddress. It is also possible for the MT delivery or MO submission scenarios, to have the policy instantiation determined by a combination of the Subscriber associated with the OriginatingAddress and the Subscriber associated with the DestinationAddress. In such cases these subscriber's would have to be feature server subscriber's so that an appropriate policy would exist. To accommodate this variability a particular embodiment would include a configuration parameter, which encapsulates the TextificationPolicySelection. This would be set to either OA or DA or both.
7. The Locale is derived from a system configuration parameter and from the character encoding header of the SMS text message header.
8. The MessageTransformer creates a TranslationStrategy which will define and drive the mechanism for performing the translation.
9. The TranslationStrategy can be, but is not limited to the following strategies, SimpleTextTranslator, SemanticTextTranslator, PhraseTranslator
10. The MessageTransformer sets the TranslationPolicy in the TextificationDictionary, by invoking setTranslationPolicy
11. The MessageTransformer sets the TranslationStrategy in the TextificationDictionary by invoking setTranslationStrategy.
12. The MessageTransformer creates a MessageTokenIterator from the MessageTokenList.
13. The MessageTransformer iterates over the MessageTokenList to retrieve the next token in the list with next () method invocation.
14. The MessageTransformer invokes lookup with a MessageToken as argument, and retrieves a TxtToken or null.
15. The MessageTransformer adds the returned conversion to the TranslationTokenList and updates the freeSpaceCount.
16. The MessageTransformer returns the TranslationTokenList when it has processed the full MessageTokenList.

The system preferably includes localization and internationalization support. The actual internationalization mechanism is an integral part of the system, but it requires regional and national study of the "Text speak" of the target country of deployment.

The TranslationStrategy is a policy-driven abstraction. This means that the actual algorithm chosen for the translation can be configurable and determined at runtime. The rules for algorithm selection are implementation details, but could include subscriber profile information. Examples of translation strategies include: SimpleTextTranslation, SemanticTextTranslation, PhraseTranslation, encapsulated in the SimpleTextTranslator, SemanticTextTranslator, and PhraseTranslator abstractions in Fig. 5. With SimpleTextTranslation each translatable word has a mapping to a textified equivalent. Some examples of this are:

**Table 1: examples of simple text translation policy**

| | |
|---|---|
| are | R |
| you | u |
| there | der |
| to | 2 |
| for | 4 |
| them | dem |
| later | 18r |

SemanticTextTranslation and PhraseTranslation strategies would be variations on a similar theme, whereby a group of words in the SMS text body are contextualized and translated as a unit. For example, the group of words "Meeting tonight at eight o'clock", could translate to "Me10 2nite @ 8 oclock" with simple text translation. However, with SemanticTextTranslation it is possible to translate the sample text "Meeting tonight at eight o'clock" to (at least) two possible equivalent without loss of semantics for example, "Me10 2nite @ 8", and "Me10 @ 8 pm". In each of these SemanticTextTranslation examples the "o'clock" has been removed from the text without loss of semantics. The first version of this translation could be viewed as a phrase translation, i.e. the words "eight o'clock" in the original text are translated into 8, while the second version of the translation could be viewed as a Semantic translation as it takes into account the "tonight" in the original text to translate the words "eight o'clock" into 8 pm.

Further examples of phrase translation include the following: (1) "How's it going" could translate to "How R u". (2) "What's the story" could translate into "any stories". These are examples of colloquial phrase translation.

An additional consideration with respect to the use of UDH as a "vehicle" for holding the CPY: and FWD: tags in a message, and the fact the UDH is still part of the overall SMS text message body size and so can't extend the max capacity for a particular network. For GSM this is typically set at 160 characters. With the message content compression, it will be possible to utilize the UDH for copy and divert service and to insert the CPY: and FWD: tags in a transparent manner, if it was desired to do so. This might be required if it is desired to make the user experience for copying and divert transparent to the recipient subscriber. As such, information elements can be defined for this purpose.

One of the main purposes of the CPY: and FWD: tags is to detect "looped messages". That is, messages that are a copy of a copied message, or a divert of a diverted message, and so on, such that we wish to prohibit messages returning to the original sender. A simple policy is not to copy a copied message or divert a diverted message and so on. There are other more sophisticated mechanisms for detecting this "looping" of messages, for example creating a signature for the message using a hash function from unique elements of the message, such as the OA, DA, and the text body. This signature is stored in a persistent store, with a particular lifetime, and it is compared to the signature generated from copied and diverted messages to ascertain whether the original message has come "full circle".

Another consideration might be that during the processing of a message, where the textification process has been applied as a result of applying a service, such as a sponsored message service, further service application might require the rollback of the textification on the original message. This can be taken care of in a number of ways. For example in the Feature Server system, the MessageContext records this fact, that is the "rollback" of the message body modification and as a result the last interceptor in the ServiceChain, that is the ResponseGeneratorInterceptor, will not set an attribute in the ResponseMessage to indicate that the transposed text body is required. Similarly, if Copy or Divert services are applied subsequent to a service interceptor, which resulted in the conversion, for example Sponsored Message Service, and if the rollback condition is now set in the MessageContext, the Copy or Divert will be applied without conversion, with the original message being used.

Additionally, it can happen that having applied the conversion process to a particular message, insufficient space is obtained for the requesting service object. In this instance a system defined InsufficientTextificationSpacePolicy is applied. In this embodiment, it is proposed to utilize the conversion rollback strategy described above, and to return an InsufficientSpaceException to the requesting object or subsystem.

In the scenarios where additional text tags are necessary, such as Copy and Divert service, a default truncation policy might be used for the Copy and Divert messages. In a Sponsored Message Service scenario it will not be possible to insert the sponsored message text, therefore such a service would not be applied when an Insufficient SpaceException has been raised.

It is noted that in any embodiment of this invention a range of configurable policies would be provided which are then selected by an operator to configure their system's behaviour.

At this point it may be informative to illustrate the process with some textification examples:

### Example 1.

"CPY:" tag needs to be added to a long message:
Meeting tonight at eight. agenda items are: « a list of agenda items that are 115 characters long »

This will then allow us to insert the "CPY:" tag into the copied text message.

Thus the message may be transposed to:
CPY:Meeting 2nite @ 8. agenda items R: : « a list of agenda items that are 115 characters long »

### Example 2.

"FWD:" tag needs to be added to a long message. If we have the following message:
Meeting with customer went well. Many issues discussed. Main ones are:« 90 characters of issues»

This allows the insertion of the "FWD:" tag into the diverted text message, and the message is transposed to:
FWD:Me10 with customer went well. Many issues discussed. Main 1s R:« 90 characters of issues»

### Example 3.

A sponsored message tag needs to be added to a long message:
Hi, we're going to Shay's tonight at 8 for pizza. Sorcha is big into them. Fiachra is keen. Hope Siofra is there ;-) Will you be there?

So the sponsor message analyser spots the pizza in the context of the message, and wishes to insert a "Domino's special 3 for 2 call 1850366466" message. Could transpose into:
Hi, we R goin 2 Shay's 2nite @ 8 4 pizza. Sorcha is big in2 dem. Fiachra's keen. Hope Siofra's der ;-) Will u b der? **Pizza special 3 for 2 call 1850366466.

The above examples demonstrate the addition of text tags or other information using space in short message(s) freed up by the textification process. In an alternative embodiment the content may be translated by alternative compression methods such as those defined in 3GPP 23.042 and the service-oriented text such as text tags or text advertisement can be added using the space freed up. The decision on whether to apply such compression is dictated by the pertinent translation policy for the subscriber and the handset decompression capabilities of the subscriber.

The invention has been described above as being provided in a mobile network element, namely in a feature server as an object subsystem within the feature server also having copy, divert and sponsored message service components. It is also envisaged that the message interception, conversion, and onward forwarding functionality could be performed by separate entities. For example, a service centre may perform the interception and onward forwarding and request conversion by a separate entity. For example, there may be direct inter-working between the feature server and a service centre to provide an SMS interception mechanism. This interception may be achieved by 'tromboning' of the messages received by the service centre via conventional submission/delivery protocols to the feature-server which then applies subscriber services before returning a new, and possibly modified, message to the service-centre for onward delivery.

The interception may alternatively be achieved via a proprietary 'triggering' protocol (such as the FSP protocol) which allows the service centre to pass a message to the feature server and hold delivery of the message pending until the feature server returns a response which includes the, possibly modified, message together with attributes indicating how the service-centre should complete message-processing.

In another embodiment, the message conversion and onward forwarding is performed on a mobile device, preferably by a software client executing on the device. Thus, this invention could be used by device manufacturers or SMS client manufacturers to provide subscribers with a convenient way of reducing their costs when sending SMS texts. A configurable setting on the device would enable the automatic conversion of an SMS message when it exceeds the single message limit, typically 160 characters. This would reduce the need for concatenated messages and reduce the transmission costs for a subscriber. Also, user device message conversion could be performed according to a subscriber policy. This may include need for the device to free up space to add information in any manner as described above. Where message conversion is done by the user device this could be in conjunction with an application, either on a local computer or a network-based server.

The invention is not limited to the embodiments described but may be varied in construction and detail.

## Claims

1. A message processing system for operation in a messaging network, the system comprising:
a message converter, and
a communication processor for forwarding converted messages,
**characterized in that**,
the system comprises a network interceptor comprising at least one signalling gateway for automatically intercepting in-flight SMS messages or SMS message routing requests being transmitted in said messaging network,
the message converter comprises a translator adapted to dynamically translate content of intercepted messages in real time to provide a converted message with compressed content, and
wherein the translator comprises a parser adapted to parse a message to identify words or phrases which are candidates for translation, to tokenize them, and to iterate over the message, replacing original words and phrases with shorter user-readable words and phrases,
wherein the message converter adds information to a message using space freed up by content translation;
wherein the message converter comprises at least one service chain of service interceptors for applying services, at least one of said services being content translation; and wherein the services include subscriber-level services; and wherein at least one service interceptor adds information in the form of one or more service tags using at least some space freed up by the content translation.

2. A message processing system as claimed in claim 1, wherein the signalling gateway is adapted to provide a message interception point and an integration point within a network.

3. A message processing system as claimed in either of claims 1 or 2, wherein the system is adapted to operate as an end system at a MAP layer of the network and to transparently intercept in-flight messages transmitted in the signalling system and to perform translation based on pattern matching algorithms.

4. A message processing system as claimed in any preceding claim, wherein the network interceptor is adapted to intercept messages, to extract relevant details, and to submit them to the translator.

5. A message processing system as claimed in any preceding claim, wherein there are one or more network interceptors each distributing to one or more translators.

6. A message processing system as claimed in any preceding claim, wherein the system is adapted to operate independently of user devices transmitting or receiving messages and not requiring user interaction, and the translator performs content translation in a manner whereby the translated content is user-readable and so downstream de-compression is not required.

7. A message processing system as claimed in any preceding claim, wherein a service interceptor is adapted to perform message diversion using space freed up by content translation to add diversion tags.

8. A message processing system as claimed in any preceding claim, wherein a service interceptor is adapted to send copied messages to a subscriber's copy list using space freed up by content translation to add copy tags.

9. A message processing system as claimed in any preceding claim, comprising a service interceptor adapted to add information in the form of additional content such as sponsored or advertising content to messages using space freed up by content translation.

10. A message processing system as claimed in any preceding claim, wherein the service interceptors include an automatic reply service interceptor; wherein said service interceptors add automatic reply text using space freed up by content translation.

11. A message processing system as claimed in any preceding claim, wherein at least one service interceptor is adapted to dynamically invoke translation if space is required for it to perform its service; and wherein a service interceptor is adapted to prevent repetition of a service already applied to a message, to prevent looping of the message.

12. A messaging system as claimed in any preceding claim, wherein a service interceptor prevents copying of a copied message and another service interceptor prevents diversion of a diverted message.

13. A message processing system as claimed in any preceding claim, wherein a service interceptor creates a signature for the message using a hash function from unique elements of the message, stores the signature in a persistent store with a particular lifetime, and compares the generated signature with one which is received in the message; and wherein a service interceptor is adapted to add information in the form of user data header information elements.

14. A message processing system as claimed in any preceding claim, wherein the translator is adapted to store pre-configured translation policies and to operate according to said policies.

15. A message processing system as claimed in any preceding claim, wherein the translator is adapted to operate according to a space requirement policy in which translation is performed for only a required level of space to be freed.

16. A message processing system as claimed in any preceding claim, wherein the message converter operates according to a subscriber policy which indicates whether a subscriber has opted into a translation service or not, whether the service is being applied in the delivery domain or the submission domain, and to indicate the relevant language and region for translation; and wherein a policy includes subscriber preferences for guiding conversion.

17. A message processing system as claimed in any preceding claim, wherein the translator is adapted to automatically configure a translation algorithm in run time.

18. A message processing system as claimed in any preceding claim, wherein the translator is adapted to perform rollback of the translation to re-generate the original message.

19. A message processing system as claimed in any preceding claim, wherein the translator comprises an object-oriented architecture, in which functions are performed by instantiating objects to provide the service interceptors and other functions.

20. A message processing system as claimed in any of claims 1 to 5 and 7 to 19, wherein the translator performs translation in a manner which requires downstream de-compression.

21. A message processing system as claimed in any preceding claim, wherein the message converter is adapted to reduce the number of segments in a concatenated message by virtue of the content translation.

22. A user device for operation in a messaging network, the device comprising a message converter comprising a translator for dynamically translating content of messages in real time to provide compressed content, wherein the message converter is adapted to add information to the message using space freed up by the content translation to provide a converted message, wherein the translator translates only sufficiently to free up enough space for the added information, and wherein the content translation is performed in a manner whereby the translated content is readable and so downstream de-compression is not required.

23. A computer readable medium comprising software code for performing operations of a messaging system of any of claims 1 to 21 when executing on a digital processor.

## Patentansprüche

1. Nachrichtenverarbeitungssystem für den Betrieb in einem Nachrichtenübermittlungsnetzwerk, wobei das System Folgendes umfasst:
einen Nachrichtenkonverter und
einen Kommunikationsprozessor zum Weiterleiten von konvertierten Nachrichten,
**dadurch gekennzeichnet, dass**
das System einen Network Interceptor umfasst, der wenigstens ein Signalling Gateway zum automatischen Abfangen von In-Flight-SMS-Nachrichten oder SMS-Nachrichtenrouting-Anforderungen umfasst, die in dem genannten Nachrichtenübermittlungsnetzwerk übertragen werden,
der Nachrichtenkonverter einen Umsetzer zum dynamischen Umsetzen des Inhalts von abgefangenen Nachrichten in Echtzeit umfasst, um eine konvertierte Nachricht mit komprimiertem Inhalt zu erzeugen, und
wobei der Umsetzer einen Parser zum Analysieren einer Nachricht umfasst, um Worte oder Satzteile zu identifizieren, die Kandidaten für eine Umsetzung sind, um sie in Tokens umzusetzen und über die Nachricht zu iterieren, indem ursprüngliche Worte und Satzteile durch kürzere, für den Benutzer lesbare Worte und Satzteile ersetzt werden,
wobei der Nachrichtenkonverter Informationen zu einer Nachricht unter Nutzung von durch Inhaltsumsetzung geschaffenem Platz hinzufügt;
wobei der Nachrichtenkonverter wenigstens eine Servicekette von Service Interceptors zum Anwenden von Services umfasst, wobei wenigstens einer der genannten Services Inhaltsumsetzung ist; und wobei die Services Services auf Abonnentenebene beinhalten; und wobei wenigstens ein Service Interceptor Informationen in Form von einem oder mehreren Service-Tags unter Nutzung von wenigstens etwas durch die Inhaltsumsetzung geschaffenem Platz hinzufügt.

2. Nachrichtenverarbeitungssystem nach Anspruch 1, wobei das Signalling Gateway die Aufgabe hat, einen Nachrichtenabfangpunkt und einen Integrationspunkt in einem Netzwerk bereitzustellen.

3. Nachrichtenverarbeitungssystem nach Anspruch 1 oder 2, wobei das System die Aufgabe hat, als Endsystem auf einer MAP-Schicht des Netzwerks zu arbeiten und transparent im Signalisierungssystem übertragene In-Flight-Nachrichten abzufangen und eine Umsetzung auf der Basis von Mustervergleichsalgorithmen durchzuführen.

4. Nachrichtenverarbeitungssystem nach einem der vorherigen Ansprüche, wobei der Network Interceptor die Aufgabe hat, Nachrichten abzufangen, relevante Details zu extrahieren und sie dem Umsetzer vorzulegen.

5. Nachrichtenverarbeitungssystem nach einem der vorherigen Ansprüche, wobei ein oder mehrere Network Interceptors vorhanden sind, die jeweils zu einem oder mehreren Umsetzern verteilen.

6. Nachrichtenverarbeitungssystem nach einem der vorherigen Ansprüche, wobei das System die Aufgabe hat, unabhängig von Benutzergeräten zu arbeiten, die Nachrichten senden oder empfangen und keine Benutzerinteraktion erfordern, und der Umsetzer eine Inhaltsumsetzung so durchführt, dass der umgesetzte Inhalt für den Benutzer lesbar und daher keine stromabwärtige Dekompression erforderlich ist.

7. Nachrichtenverarbeitungssystem nach einem der vorherigen Ansprüche, wobei ein Service Interceptor die Aufgabe hat, eine Nachrichtenumleitung unter Nutzung von durch Inhaltsumsetzung geschaffenem Platz durchzuführen, um Umleitungstags hinzuzufügen.

8. Nachrichtenverarbeitungssystem nach einem der vorherigen Ansprüche, wobei ein Service Interceptor die Aufgabe hat, kopierte Nachrichten zu einer Abonnentenkopieliste unter Nutzung von durch Inhaltsumsetzung geschaffenem Platz zu senden, um Kopietags hinzuzufügen.

9. Nachrichtenverarbeitungssystem nach einem der vorherigen Ansprüche, das einen Service Interceptor umfasst, der die Aufgabe hat, Informationen in Form von zusätzlichem Inhalt, z.B. gesponsorter oder Werbeinhalt, unter Nutzung von durch Inhaltsumsetzung geschaffenem Platz zu Nachrichten hinzuzufügen.

10. Nachrichtenverarbeitungssystem nach einem der vorherigen Ansprüche, wobei die Service Interceptors einen automatischen Antwortservice Interceptor beinhalten; wobei die genannten Service Interceptors automatischen Antworttext unter Nutzung von durch Inhaltsumsetzung geschaffenem Platz hinzufügen.

11. Nachrichtenverarbeitungssystem nach einem der vorherigen Ansprüche, wobei wenigstens ein Service Interceptor die Aufgabe hat, dynamisch eine Umsetzung hervorzurufen, wenn Platz benötigt wird, um seinen Service auszuführen; und wobei ein Service Interceptor die Aufgabe hat, eine Wiederholung eines bereits auf eine Nachricht angewendeten Service zu verhindern, um ein Rundlaufen der Nachricht zu verhindern.

12. Nachrichtenverarbeitungssystem nach einem der vorherigen Ansprüche, wobei ein Service Interceptor das Kopieren einer kopierten Nachricht verhindert und ein anderer Service Interceptor das Umleiten einer umgeleiteten Nachricht verhindert.

13. Nachrichtenverarbeitungssystem nach einem der vorherigen Ansprüche, wobei ein Service Interceptor eine Signatur für die Nachricht unter Verwendung einer Hash-Funktion von eindeutigen Elementen der Nachricht erzeugt, die Signatur in einem dauerhaften Speicher mit einer bestimmten Lebenszeit speichert und die erzeugte Signatur mit einer in der Nachricht empfangenen vergleicht; und wobei ein Service Interceptor die Aufgabe hat, Informationen in Form von Benutzerdaten-Kopfinformationselementen hinzuzufügen.

14. Nachrichtenverarbeitungssystem nach einem der vorherigen Ansprüche, wobei der Umsetzer die Aufgabe hat, vorkonfigurierte Umsetzungsrichtlinien zu speichern und gemäß den genannten Richtlinien zu arbeiten.

15. Nachrichtenverarbeitungssystem nach einem der vorherigen Ansprüche, wobei der Umsetzer die Aufgabe hat, gemäß einer Platzbedarfsrichtlinie zu arbeiten, in der Umsetzung nur für ein benötigtes Maß an zu schaffendem Platz durchgeführt wird.

16. Nachrichtenverarbeitungssystem nach einem der vorherigen Ansprüche, wobei der Nachrichtenkonverter gemäß einer Abonnentenrichtlinie arbeitet, die anzeigt, ob sich ein Abonnent für einen Umsetzungsservice entschieden hat oder nicht, ob der Service in der Zustelldomäne oder in der Submissionsdomäne angewendet wird, und um die relevante Sprache und Region zur Umsetzung anzuzeigen; und wobei eine Richtlinie Abonnentenpräferenzen zum Leiten der Konversion beinhaltet.

17. Nachrichtenverarbeitungssystem nach einem der vorherigen Ansprüche, wobei der Umsetzer die Aufgabe hat, einen Umsetzungsalgorithmus in Laufzeit automatisch zu konfigurieren.

18. Nachrichtenverarbeitungssystem nach einem der vorherigen Ansprüche, wobei der Umsetzer die Aufgabe hat, ein Rollback der Umsetzung durchzuführen, um die ursprüngliche Nachricht neu zu generieren.

19. Nachrichtenverarbeitungssystem nach einem der vorherigen Ansprüche, wobei der Umsetzer eine objektorientierte Architektur umfasst, in der Funktionen durch Instanziieren von Objekten ausgeführt werden, um die Service Interceptors und andere Funktionen bereitzustellen.

20. Nachrichtenverarbeitungssystem nach einem der Ansprüche 1 bis 5 und 7 bis 19, wobei der Umsetzer eine Umsetzung auf eine Weise durchführt, die eine stromabwärtige Dekompression erfordert.

21. Nachrichtenverarbeitungssystem nach einem der vorherigen Ansprüche, wobei der Nachrichtenkonverter die Aufgabe hat, die Zahl der Segmente in einer verketteten Nachricht durch die Inhaltsumsetzung zu reduzieren.

22. Benutzergerät für den Betrieb in einem Nachrichtenübermittlungsnetzwerk, wobei das Gerät einen Nachrichtenkonverter umfasst, der einen Umsetzer zum dynamischen Umsetzen von Nachrichteninhalt in Echtzeit umfasst, um komprimierten Inhalt bereitzustellen, wobei der Nachrichtenkonverter die Aufgabe hat, Informationen zu der Nachricht unter Verwendung von durch die Inhaltsumsetzung geschaffenem Platz hinzuzufügen, um eine konvertierte Nachricht zu erzeugen, wobei der Umsetzer nur soviel umsetzt, dass genügend Platz für die hinzugefügten Informationen entsteht, und wobei die Inhaltsumsetzung so durchgeführt wird, dass der umgesetzte Inhalt lesbar und somit keine stromabwärtige Dekompression erforderlich ist.

23. Rechnerlesbares Medium, das Softwarecode zum Ausführen von Operationen eines Nachrichtenübermittlungssystems nach einem der Ansprüche 1 bis 21 bei Ausführung auf einem Digitalprozessor umfasst.

## Revendications

1. Un système de traitement de messages destiné à être utilisé dans un réseau de messagerie, le système comprenant :
un convertisseur de messages, et
un processeur de communication destiné à transmettre des messages convertis,
**caractérisé en ce que**
le système comprend un intercepteur de réseau comprenant au moins une passerelle de signalisation destinée à intercepter automatiquement des messages SMS au vol ou des demandes d'acheminement de messages SMS transmises dans ledit réseau de messagerie,
le convertisseur de messages comprend un traducteur adapté de façon à traduire dynamiquement le contenu de messages interceptés en temps réel afin de fournir un message converti avec un contenu compressé, et
où le traducteur comprend un analyseur syntaxique adapté de façon à analyser un message afin d'identifier des mots ou des expressions qui sont des candidats à traduction, de les marquer, et de réitérer le message en remplaçant les mots et les expressions d'origine par des mots et des expressions plus courts lisibles par l'utilisateur,
où le convertisseur de messages ajoute des informations à un message en utilisant l'espace libéré par la traduction de contenu,
où le convertisseur de messages comprend au moins une chaîne de services d'intercepteurs de services destinée à appliquer des services, au moins un desdits services étant la traduction de contenu, et où les services incluent des services de niveau abonné, et où au moins un intercepteur de services ajoute des informations sous la forme d'une ou plusieurs balises de service en utilisant au moins une partie de l'espace libéré par la traduction de contenu.

2. Un système de traitement de messages selon la Revendication 1, où la passerelle de signalisation est adaptée de façon à fournir un point d'interception de message et un point d'intégration à l'intérieur d'un réseau.

3. Un système de traitement de messages selon la Revendication 1 ou 2, où le système est adapté de façon à fonctionner sous la forme d'un système d'extrémité sur une couche MAP du réseau et de façon à intercepter de manière transparente des messages au vol transmis dans le système de signalisation et à exécuter une traduction en fonction d'algorithmes d'appariement des formes.

4. Un système de traitement de messages selon l'une quelconque des Revendications précédentes, où l'intercepteur de réseau est adapté de façon à intercepter des messages, extraire des détails pertinents et les soumettre au traducteur.

5. Un système de traitement de messages selon l'une quelconque des Revendications précédentes, où il y a un ou plusieurs intercepteurs de réseau, chacun distribuant vers un ou plusieurs traducteurs.

6. Un système de traitement de messages selon l'une quelconque des Revendications précédentes, où le système est adapté de façon à fonctionner indépendamment de dispositifs utilisateurs transmettant ou recevant des messages et n'exigeant pas d'interaction de l'utilisateur, et le traducteur exécute une traduction de contenu d'une manière grâce à laquelle le contenu traduit est lisible par l'utilisateur et, par conséquent, une décompression en aval n'est pas nécessaire.

7. Un système de traitement de messages selon l'une quelconque des Revendications précédentes, où un intercepteur de services est adapté de façon à exécuter une déviation de message en utilisant l'espace libéré par la traduction de contenu pour ajouter des balises de déviation.

8. Un système de traitement de messages selon l'une quelconque des Revendications précédentes, où un intercepteur de services est adapté de façon à envoyer des messages copiés à une liste de copie d'abonné en utilisant l'espace libéré par la traduction de contenu pour ajouter des balises de copie.

9. Un système de traitement de messages selon l'une quelconque des Revendications précédentes, comprenant un intercepteur de services adapté de façon à ajouter des informations sous la forme d'un contenu additionnel, tel qu'un contenu sponsorisé ou publicitaire, à des messages en utilisant l'espace libéré par la traduction de contenu.

10. Un système de traitement de messages selon l'une quelconque des Revendications précédentes, où les intercepteurs de services incluent un intercepteur de service de réponse automatique, où lesdits intercepteurs de services ajoutent un texte de réponse automatique en utilisant l'espace libéré par la traduction de contenu.

11. Un système de traitement de messages selon l'une quelconque des Revendications précédentes, où au moins un intercepteur de services est adapté de façon à invoquer dynamiquement une traduction si de l'espace est nécessaire pour qu'elle exécute son service, et où un intercepteur de services est adapté de façon à empêcher la répétition d'un service déjà appliqué à un message, de façon à empêcher un bouclage du message.

12. Un système de messagerie selon l'une quelconque des Revendications précédentes, où un intercepteur de services empêche la copie d'un message copié et un autre intercepteur de services empêche la déviation d'un message dévié.

13. Un système de traitement de messages selon l'une quelconque des Revendications précédentes, où un intercepteur de services crée une signature pour le message au moyen d'une fonction de hachage à partir d'éléments uniques du message, conserve en mémoire la signature dans une mémoire permanente avec une durée de vie particulière, et compare la signature générée à une signature qui est reçue dans le message, et où un intercepteur de services est adapté de façon à ajouter des informations sous la forme d'éléments d'informations d'en-tête de données d'utilisateur.

14. Un système de traitement de messages selon l'une quelconque des Revendications précédentes, où le traducteur est adapté de façon à conserver en mémoire des règles de traduction préconfigurées et de façon à fonctionner selon lesdites règles.

15. Un système de traitement de messages selon l'une quelconque des Revendications précédentes, où le traducteur est adapté de façon à fonctionner selon une règle d'exigence d'espace dans laquelle une traduction est exécutée pour seulement un niveau requis d'espace à libérer.

16. Un système de traitement de messages selon l'une quelconque des Revendications précédentes, où le convertisseur de messages fonctionne selon une règle d'abonné qui indique si un abonné a opté d'accepter un service de traduction ou non, si le service est appliqué dans le domaine de remise ou le domaine de soumission, et de façon à indiquer la langue et la zone géographique pertinentes pour la traduction, et où une règle contient des préférences d'abonné destinées à guider la conversion.

17. Un système de traitement de messages selon l'une quelconque des Revendications précédentes, où le traducteur est adapté de façon à configurer automatiquement un algorithme de traduction en cours d'exécution.

18. Un système de traitement de messages selon l'une quelconque des Revendications précédentes, où le traducteur est adapté de façon à exécuter une répétition de la traduction afin de régénérer le message original.

19. Un système de traitement de messages selon l'une quelconque des Revendications précédentes, où le traducteur comprend une architecture orientée objet, dans laquelle des fonctions sont exécutées par une instanciation d'objets afin de fournir les intercepteurs de services et d'autres fonctions.

20. Un système de traitement de messages selon l'une quelconque des Revendications 1 à 5 et 7 à 19, où le traducteur exécute une traduction d'une manière qui exige une décompression en aval.

21. Un système de traitement de messages selon l'une quelconque des Revendications précédentes, où le convertisseur de messages est adapté de façon à réduire le nombre de segments dans un message concaténé en vertu de la traduction du contenu.

22. Un dispositif utilisateur destiné à être utilisé dans un réseau de messagerie, le dispositif comprenant un convertisseur de messages comprenant un traducteur destiné à traduire dynamiquement le contenu de messages en temps réel afin de fournir un contenu compressé, où le convertisseur de messages est adapté de façon à ajouter des informations au message en utilisant l'espace libéré par la traduction de contenu afin de fournir un message converti, où le traducteur traduit uniquement suffisamment pour libérer assez d'espace pour les informations ajoutées, et, où la traduction de contenu est exécutée d'une manière grâce à laquelle le contenu traduit est lisible et, par conséquent, une décompression en aval n'est pas nécessaire.

23. Un support lisible par ordinateur contenant du code logiciel destiné à exécuter des opérations d'un système de messagerie selon l'une quelconque des Revendications 1 à 21 lorsqu'il est exécuté sur un processeur numérique.
